(19) Europäisches Patentamt
European Patent Office
Office européen des brevets

(11) EP 4 563 616 A1

(12) EUROPEAN PATENT APPLICATION

(43) Date of publication:
**04.06.2025 Bulletin 2025/23**

(21) Application number: **23212673.0**

(22) Date of filing: **28.11.2023**

(51) International Patent Classification (IPC):
***C08G 63/183*** *(2006.01)* ***C08G 63/672*** *(2006.01)*
***C11D 3/00*** *(2006.01)* ***C11D 3/37*** *(2006.01)*

(52) Cooperative Patent Classification (CPC):
**C08G 63/672; C08G 63/183; C11D 3/0036; C11D 3/3715**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Clariant International Ltd**
**4132 Muttenz (CH)**

(72) Inventors:
- **YAMADA, Hiroe**
  **65926 Frankfurt (DE)**
- **LIEDEL, Clemens**
  **65926 Frankfurt (DE)**
- **MAGER, Michael**
  **65926 Frankfurt (DE)**
- **BENSON, Hannah**
  **65926 Frankfurt (DE)**

(74) Representative: **Clariant Produkte (Deutschland) GmbH**
**Patent Management**
**Industriepark Höchst, G 860**
**65926 Frankfurt am Main (DE)**

# (54) POLYESTER BASED ON RECYCLED DIMETHYL TEREPHTHALATE

(57) A polyester is described which comprises one or more structural units of the formula (I)

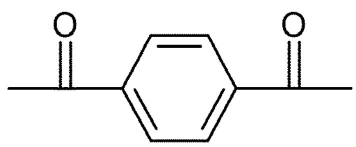

(I)

wherein at least 50 wt.-% of the one or more structural units of the formula (I) contained in the polyester are derived from recycled dimethyl terephthalate, in each case based on the total weight of the one or more structural units of the formula (I) contained in the polyester. The polyester may be used as a soil release polymer, preferably in laundry detergent compositions.

EP 4 563 616 A1

## Description

The invention relates to polyesters based on recycled dimethyl terephthalate, a process for their preparation, their use as soil release polymers, laundry detergent compositions comprising the polyesters and a method of washing a textile comprising the step of contacting the textile with an aqueous solution comprising such a laundry detergent composition.

Polyesters based on dimethyl terephthalate and their use as soil release polymers especially in laundry detergent compositions are already known. GB 1,466,639, US 4,132,680, US 4,702,857, EP 0 199 403, US 4,711,730, US 4,713,194, and US 4,759,876 describe polyesters based on dimethyl terephthalate and their use as soil release polymers and disclose aqueous detergent compositions containing soil release polymers.

However, there is still a need for new substances which show soil release properties and have an improved sustainability profile, especially with respect to the Carbon Footprint.

Therefore, it was an object of the present invention to provide substances with an improved sustainability profile which may be used in laundry detergent compositions and provide a soil release effect.

This problem is solved by the use of recycled dimethyl terephthalate in the preparation of specific polyesters.

Therefore, a subject matter of the present invention is a polyester comprising one or more structural units of the formula (I)

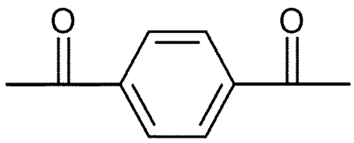

(I)

and one or more structural units of the formula (II) or mixtures thereof

$-O(C_nH_{2n})O-$ (II)

wherein $(C_nH_{2n})$ is a linear or branched alkylene group with n being a number from 2 to 10 or mixtures thereof, preferably with n being a number from 2 to 6 or mixtures thereof, more preferably is selected from the group consisting of $(C_2H_4)$, $(C_3H_6)$, $(C_4H_8)$ and mixtures thereof, even more preferably is selected from the group consisting of $(C_2H_4)$, $(C_3H_6)$ and mixtures thereof, and particularly preferably is $(C_3H_6)$,

and one or more terminal groups of the formula (III-a) or mixtures thereof

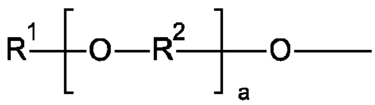

(III-a)

wherein

$R^1$ is a linear or branched, preferably a linear, alkyl group comprising from 1 to 30 carbon atoms or a linear or branched, preferably a linear, alkenyl group comprising one or more double bonds and from 2 to 30 carbon atoms or mixtures thereof, preferably a linear or branched, preferably a linear, alkyl group comprising from 1 to 20 carbon atoms or a linear or branched, preferably a linear, alkenyl group comprising one or more double bonds and from 2 to 20 carbon atoms or mixtures thereof,

a is, based on a molar average, a number from 1 to 200, preferably from 4 to 150, more preferably from 10 to 120, and

$R^2$ is a linear or branched alkylene group $(C_mH_{2m})$ with m being a number from 2 to 10 or mixtures thereof, preferably with m being a number from 2 to 6 or mixtures thereof, more preferably is selected from the group consisting of $(C_2H_4)$, $(C_3H_6)$, $(C_4H_8)$ and mixtures thereof, even more preferably is selected from the group consisting of $(C_2H_4)$, $(C_3H_6)$ and mixtures thereof, and particularly preferably is $(C_2H_4)$,

characterized in that at least 50 wt.-%, preferably at least 80 wt.-%, and more preferably 100 wt.-%, of the one or more structural units of the formula (I) contained in the polyester are derived from recycled dimethyl terephthalate, in each case based on the total weight of the one or more structural units of the formula (I) contained in the polyester.

Processes to obtain recycled dimethyl terephthalate are already known.

WO 2020/002999 A2 relates to the depolymerization of polyethylene terephthalate and the recovery of dimethyl terephthalate. US 2023/0125080 A1 describes a process for depolymerization of polyethylene terephthalate to form dimethyl terephthalate. US 2023/0088250 A1 describes chemical recycling facilities for processing mixed plastic waste including a PET (polyethylene terephthalate) methanolysis facility, during which PET can be chemically decomposed to form ethylene glycol as the principal glycol and dimethyl terephthalate as the principal terephthalyl.

The one or more structural units of the formula (I) of the polyester according to the invention are derived from terephthalic acid or its salts or its dialkyl esters or mixtures thereof, preferably its ($C_1$-$C_4$)-dialkyl esters or mixtures thereof and more preferably its dimethyl ester, wherein, in each case and as described above, at least a part of the one or more structural units of the formula (I) of the polyester according to the invention is derived from recycled dimethyl terephthalate. Preferably, all of the one or more structural units of the formula (I) of the polyester according to the invention are derived from recycled dimethyl terephthalate.

The recycled dimethyl terephthalate is preferably obtained by methanolysis of polyethylene terephthalate.

Preferably, the number of structural units of the formula (I) in the polyester according to the invention is, based on a molar average, from 2 to 60, more preferably from 2 to 40, even more preferably from 2 to 30, particularly preferably from 2 to 20 and extraordinarily preferably from 5 to 20.

In a preferred embodiment of the invention, the polyester according to the invention comprises one or more structural units of the formula (I-a)

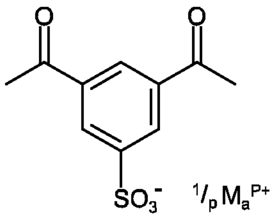

(I-a)

wherein $^1/_p\, M_a^{p+}$ is a cation, preferably selected from the group consisting of monovalent cations $M_a^+$ (p = 1), divalent cations ½ $M_a^{2+}$ (p = 2) and trivalent cations $^1/_3\, M_a^{3+}$ (p = 3) and more preferably selected from the group consisting of $H^+$, $Li^+$, $Na^+$, $K^+$, ½ $Mg^{2+}$, ½ $Ca^{2+}$, $^1/_3\, Al^{3+}$, $NH_4^+$ and $R_aR_bR_cR_dN^+$, wherein $R_a$, $R_b$, $R_c$ and $R_d$, independently of one another, are H, linear or branched, preferably linear, ($C_1$-$C_{22}$)-alkyl groups or linear or branched, preferably linear, ($C_2$-$C_{10}$)-hydroxyalkyl groups, and wherein in the cations $R_aR_bR_cR_dN^+$ at least one of $R_a$, $R_b$, $R_c$ and $R_d$ is not H.

The one or more structural units of the formula (I-a) are derived from 5-sulfoisophthalic acid, its salts, its (di) alkylesters, their salts or mixtures thereof, preferably its ($C_1$-$C_4$)-(di)alkyl esters, their salts or mixtures thereof and more preferably its (di)methyl esters, their salts or mixtures thereof.

Typically, such further structural units of the formula (I-a) would be present in an amount smaller than 30 wt.-% and preferably smaller than 25 wt.-%, in each case based on the total weight of the polyester according to the invention.

In addition to the one or more structural units of the formula (I) and, optionally, the one or more structural units of the formula (I-a), further structural units derived from other di- or polycarboxylic acids or their salts or their (di)alkylesters can be used in the polyester according to the invention, such as, phthalic acid, isophthalic acid, 3-sulfophthalic acid, 4-sulfophthalic acid, naphthalene-1,4-dicarboxylic acid, naphthalene-2,6-dicarboxylic acid, tetrahydrophthalic acid, trimellitic acid, diphenoxyethane-4,4'-dicarboxylic acid, diphenyl-4,4'-dicarboxylic acid, 2,5-furandicarboxylic acid, adipic acid, sebacic acid, decan-1,10-dicarboxylic acid, fumaric acid, succinic acid, 1,4-cyclohexanedicarboxylic acid, cyclohexanediacetic acid, glutaric acid, azelaic acid, or their salts or their (di)alkyl esters, preferably their ($C_1$-$C_4$)-(di)alkyl esters and more preferably their (di)methyl esters, or mixtures thereof. Typically, such further structural units derived from other di- or polycarboxylic acids or their salts or their (di)alkylesters would be present to a minor extent, for example in an amount smaller than 5 wt.-%, based on the total weight of the polyester according to the invention.

The one or more structural units of the formula (II) of the polyesters according to the invention are derived from glycol $H\text{-}O(C_nH_{2n})O\text{-}H$, wherein "n" has the meaning given above.

Preferably, the one or more structural units of the formula (II) are derived from ethylene glycol, 1,2-propyleneglycol, 1,3-propyleneglycol, 2-methyl-1,3-propanediol, 1,4-butanediol, 1,3-butanediol, 2,3-butanediol, 1,2-butanediol, 2,2-dimethyl-1,3-propanediol, 1,2-pentanediol, 1,5-pentanediol, 1,2-hexanediol, 1,6-hexanediol or mixtures thereof.

In the case that one molecule of the polyesters according to the invention comprises two or more structural units of the formula (II) the definition of "n" may vary between those structural units.

In addition, further structural units derived from triols or tetraols can be used in the polyester according to the

invention, such as, glycerol, pentaerythritol or mixtures thereof. Typically, such further structural units would be present to a minor extent, for example in an amount smaller than 5 wt.-% based on the total weight of the polyester according to the invention.

Examples of the alkyl and alkenyl groups $R^1$ in the one or more terminal groups of the formula (III-a) are, for example, methyl, ethyl, linear or branched propyl, butyl, pentyl, hexyl, heptyl, octyl (e.g. capryl), nonyl, decyl, undecyl, dodecyl, tridecyl (e.g. isotridecyl), tetradecyl, pentadecyl, hexadecyl, heptadecyl, octadecyl, nonadecyl, icosyl, henicosyl, docosyl, tricosyl, tetraicosyl, vinyl, propenyl, butenyl, pentenyl, hexenyl, heptenyl, octenyl, nonenyl, decenyl, dodecenyl, tetradecenyl, hexadecenyl, octadecenyl, octadecadienyl, octadecatrienyl, eicosenyl, eicosadienyl, eicosatetraenyl, docosenyl, docosahexaenyl, tetracosenyl, or mixtures thereof.

The groups $R^1$ in the one or more terminal groups of the formula (III-a) may also be mixtures which have been derived or obtained from natural sources and comprise one or more alkyl and/or one or more alkenyl groups and in case these mixtures comprise one or more alkenyl groups, they may also be partially or totally hydrogenated. Examples of such mixtures are cocoyl, partially or totally hydrogenated variants of cocoyl, talloyl or partially or totally hydrogenated variants of talloyl.

In a preferred embodiment of the invention, $R^1$ in the one or more terminal groups of the formula (III-a) is a linear or branched, preferably a linear, alkyl group comprising from 1 to 18 carbon atoms or a linear or branched, preferably a linear, alkenyl group comprising one or more double bonds and from 2 to 18 carbon atoms or mixtures thereof.

In a more preferred embodiment of the invention, $R^1$ in the one or more terminal groups of the formula (III-a) is a linear or branched, preferably a linear, alkyl group comprising from 10 to 18 carbon atoms or a linear or branched, preferably a linear, alkenyl group comprising one or more double bonds and from 10 to 18 carbon atoms or mixtures thereof.

In an even more preferred embodiment of the invention, $R^1$ in the one or more terminal groups of the formula (III-a) is a linear or branched, preferably a linear, alkyl group comprising from 10 to 16 carbon atoms or a linear or branched, preferably a linear, alkenyl group comprising one or more double bonds and from 10 to 16 carbon atoms or mixtures thereof.

In another preferred embodiment of the invention, $R^1$ in the one or more terminal groups of the formula (III-a) is a linear or branched, preferably a linear, alkyl group comprising from 1 to 20 and preferably from 1 to 18 carbon atoms, or mixtures thereof.

In another more preferred embodiment of the invention, $R^1$ in the one or more terminal groups of the formula (III-a) is methyl.

In another more preferred embodiment of the invention, $R^1$ in the one or more terminal groups of the formula (III-a) is a linear or branched, preferably a linear, alkyl group comprising from 10 to 20 carbon atoms or mixtures thereof.

In another even more preferred embodiment of the invention, $R^1$ in the one or more terminal groups of the formula (III-a) is a linear or branched, preferably a linear, alkyl group comprising from 10 to 18 carbon atoms or mixtures thereof.

In a particularly preferred embodiment of the invention, $R^1$ in the one or more terminal groups of the formula (III-a) is a linear or branched, preferably a linear, alkyl group comprising from 10 to 16 carbon atoms or mixtures thereof.

In another preferred embodiment of the invention, $R^1$ in the one or more terminal groups of the formula (III-a) is selected from the group consisting of linear or branched alkyl groups comprising from 10 to 16 carbon atoms (such as lauryl, myristyl or isotridecyl), cocoyl, partially or totally hydrogenated variants of cocoyl, talloyl, partially or totally hydrogenated variants of talloyl and mixtures thereof, more preferably is selected from the group consisting of linear or branched, preferably linear, alkyl groups comprising from 10 to 16 carbon atoms, talloyl, partially or totally hydrogenated variants of talloyl and mixtures thereof, even more preferably is selected from the group consisting of linear or branched, preferably linear, alkyl groups comprising from 10 to 16 carbon atoms, partially or totally hydrogenated variants of talloyl and mixtures thereof and particularly preferably is selected from the group consisting of lauryl, myristyl, partially or totally hydrogenated variants of talloyl and mixtures thereof.

In an extraordinarily preferred embodiment of the invention, $R^1$ in the one or more terminal groups of the formula (III-a) is selected from the group consisting of lauryl, myristyl and mixtures thereof.

In the case that at least two different types of $[O(C_mH_{2m})]$ groups, for example $[O(C_2H_4)]$, $[O(C_3H_6)]$ and $[O(C_4H_8)]$ groups, exist in a terminal group of the formula (III-a), they may be arranged blockwise, alternating, periodically and/or statistically, preferably blockwise and/or statistically. This means that in a terminal group of the formula (III-a), the $[O(C_mH_{2m})]$ groups, and e.g. the groups $[O(C_2H_4)]$, $[O(C_3H_6)]$ and $[O(C_4H_5)]$, may be arranged, for example, in a purely statistically or blockwise form but may also be arranged in a form which could be considered as both statistical and blockwise, e.g. small blocks of $[(OC_2H_4)]$ and $[O(C_3H_6)]$ arranged in a statistical manner, or in a form wherein adjacent instances of statistical and blockwise arrangements of the groups $[O(C_2H_4)]$, $[O(C_3H_6)]$ and [O(CaHa)] exist.

Any of the groups $[O(C_mH_{2m})]$, e.g. any of the groups $[O(C_2H_4)]$, $[O(C_3H_6)]$ and $[O(C_4H_8)]$, can be linked to $R^1$- and -O in a terminal group of the formula (III-a). This means, for example, that both, $R^1$- and -O in a terminal group of the formula (III-a), may be connected to a $[O(C_2H_4)]$ group, they may both be connected to a $[O(C_3H_6)]$ group, they may both be connected to a $[O(C_4H_8)]$ group or they may be connected to different groups selected from $[O(C_2H_4)]$, $[O(C_3H_6)]$ and

$[O(C_4H_8)]$.

In the case that one molecule of the polyesters according to the invention comprises two or more terminal groups of the formula (III-a) the definition of $R^1$, $R^2$ and "a" may vary between those terminal groups.

In addition to the one or more terminal groups of the formula (III-a) or mixtures thereof the polyester according to the invention may comprise further terminal groups of the formula (III-b) and/or (III-c)

$$(M_b^{i+})_x\,{}^{-}O_3S\text{-}(C_2H_4O)_y\text{-} \qquad \text{(III-b)}$$

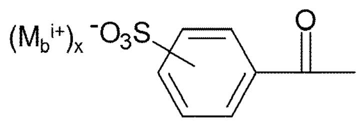

(III-c)

wherein

- $M_b$ is hydrogen or a monovalent cation or bivalent cation, preferably an ammonium cation, a substituted ammonium cation, or an alkali metal cation
- i is 1 or 2,
- x is 0.5 or 1 and the product $i \cdot x = 1$, and
- y is, based on a molar average, a number from 1 to 15, preferably from 1 to 3 and more preferably is 1.

Typically, such further terminal groups would be present to a minor extent, for example in an amount smaller than 40 wt.-%, preferably smaller than 20 wt.-%, more preferably smaller than 10 wt.-% and even more preferably smaller than 5 wt.-%, in each case based on the total weight of the polyester according to the invention.

In a more preferred embodiment of the invention, in the polyester according to the invention, the number of structural units of the formula (I) is, based on a molar average, from 2 to 15, $R^1$ is a linear or branched, preferably a linear, alkyl group comprising from 1 to 20 and preferably from 1 to 18 carbon atoms, or mixtures thereof, and a is, based on a molar average, a number from 10 to 150, preferably from 15 to 140.

In an even more preferred embodiment of the invention, in the polyester according to the invention, the number of structural units of the formula (I) is, based on a molar average, from 2 to 15, $R^1$ is methyl, and a is, based on a molar average, a number from 10 to 100, preferably from 15 to 60.

In a further, even more preferred embodiment of the invention, in the polyester according to the invention, the number of structural units of the formula (I) is, based on a molar average, from 5 to 15, $R^1$ is a linear or branched, preferably a linear, alkyl group comprising from 10 to 20 carbon atoms or mixtures thereof, and a is, based on a molar average, a number from 60 to 150, preferably from 70 to 140. In this further, even more preferred embodiment of the invention, $R^1$ is a linear or branched, preferably a linear, alkyl group comprising from 10 to 16 carbon atoms or mixtures thereof, and more preferably is selected from the group consisting of lauryl, myristyl and mixtures thereof.

In a preferred embodiment of the invention, the polyester according to the invention comprises one or more polyalkyleneglycol-derived structural units of the formula (IV-a)

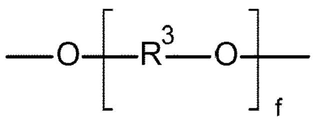

(IV-a)

or mixtures thereof, wherein

- f is, based on a molar average, a number from 2 to 200, preferably from 4 to 150, more preferably from 10 to 120 and even more preferably from 35 to 120, and
- $R^3$ is a linear or branched alkylene group $(C_nH_{2n})$ with n being a number from 2 to 10 or mixtures thereof, preferably with n being a number from 2 to 6 or mixtures thereof, more preferably is selected from the group consisting of $(C_2H_4)$, $(C_3H_6)$, $(C_4H_8)$ and mixtures thereof, even more preferably is selected from the group consisting of $(C_2H_4)$, $(C_3H_6)$ and mixtures thereof, and particularly preferably is $(C_2H_4)$.

In the case that at least two different types of $[(C_nH_{2n})O]$ groups, for example $[(C_2H_4)O]$, $[(C_3H_6)O]$ and $[(C_4H_8)O]$ groups, exist in a structural unit of the formula (IV-a), they may be arranged blockwise, alternating, periodically and/or

statistically, preferably blockwise and/or statistically. This means that in a structural unit of the formula (IV-a), the $[(C_nH_{2n})O]$ groups, and e.g. the groups $[(C_2H_4)O]$, $[(C_3H_6)O]$ and $[(C_4H_8)O]$, may be arranged, for example, in a purely statistically or blockwise form but may also be arranged in a form which could be considered as both statistical and blockwise, e.g. small blocks of $[(C_2H_4)O]$ and $[(C_3H_6)O]$ arranged in a statistical manner, or in a form wherein adjacent instances of statistical and blockwise arrangements of the groups $[(C_2H_4)O]$, $[(C_3H_6)O]$ and [(CaHs)O] exist.

Within the structure element $-[R^3-O]_f-$ in a structural unit of the formula (IV-a) any of the groups $[(C_nH_{2n})O]$, e.g. any of the groups $[(C_2H_4)O]$, $[(C_3H_6)O]$ and $[(C_4H_8)O]$, can form an end group of the structure element $-[R^3-O]_f-$. This means, for example, that the two end groups of the structure element $-[R^3-O]_f-$ in a structural unit of the formula (IV-a) may be formed by $[(C_2H_4)O]$ groups, may be formed by $[(C_3H_6)O]$ groups, may be formed by $[(C_4H_8)O]$ groups or may be formed by different groups selected from $[(C_2H_4)O]$, $[(C_3H_6)O]$ and $[(C_4H_8)O]$.

In the case that one molecule of the polyesters according to the invention comprises two or more structural units of the formula (IV-a) the definition of $R^3$ and "f" may vary between those structural units.

In the polyester according to the invention, the amount of the one or more terminal groups of the formula (III-a) or mixtures thereof, or, in case the polyester according to the invention comprises one or more polyalkyleneglycol-derived structural units of the formula (IV-a) or mixtures thereof, the combined amount of the one or more terminal groups of the formula (III-a) or mixtures thereof and the one or more polyalkyleneglycol-derived structural units of the formula (IV-a) or mixtures thereof, preferably is at least 10 wt.-%, more preferably is at least 20 wt.-%, even more preferably is at least 40 wt.-%, particularly preferably is from 40 to 90 wt.-% and extraordinarily preferably is from 50 to 90 wt.-%, in each case based on the total weight of the polyester.

In a preferred embodiment of the invention, the amount of the one or more terminal groups of the formula (III-a) or mixtures thereof in the polyester according to the invention is at least 40 wt.-%, more preferably is from 40 to 90 wt.-% and even more preferably is from 50 to 90 wt.-%, in each case based on the total weight of the polyester. Such polyesters according to the invention preferably do not comprise structural units of the formula (I-a).

In another preferred embodiment of the invention, the amount of the one or more terminal groups of the formula (III-a) or mixtures thereof in the polyester according to the invention is at least 10 wt.-%, more preferably is from 12 to 90 wt.-%, even more preferably is from 15 to 85 wt.-% and particularly preferably is from 50 to 80 wt.-%, in each case based on the total weight of the polyester. Such polyesters according to the invention preferably comprise one or more structural units of the formula (I-a).

In polyesters according to the invention comprising one or more polyalkyleneglycol-derived structural units of the formula (IV-a) or mixtures thereof, the combined amount of the one or more terminal groups of the formula (III-a) or mixtures thereof and the one or more polyalkyleneglycol-derived structural units of the formula (IV-a) or mixtures thereof preferably is at least 35 wt.-%, more preferably is from 40 to 90 wt.-%, even more preferably is from 50 to 90 wt.-%, particularly preferably is from 60 to 90 wt.-% and extraordinarily preferably is from 70 to 90 wt.-%, in each case based on the total weight of the polyester.

In the polyester according to the invention, the combined amount of the one or more structural units of the formula (I), and the one or more structural units of the formula (II) or mixtures thereof, and the one or more terminal groups of the formula (III-a) or mixtures thereof, and, if present, the one or more polyalkyleneglycol-derived structural units of the formula (IV-a) or mixtures thereof, preferably is at least 50 wt.-%, more preferably is at least 60 wt.-% and even more preferably is at least 70 wt.-%, in each case based on the total weight of the polyester.

The weight average molecular weight (Mw) of the polyester according to the invention preferably is from 1500 to 20000 g/mol, more preferably from 4000 to 20000 g/mol and even more preferably from 5000 to 20000 g/mol.

The weight average molecular weight (Mw) of the polyester according to the invention may be determined by GPC analysis, preferably as detailed in the following: 10 $\mu$l of sample is injected onto a PSS Suprema column of dimensions 300 x 8 mm with porosity 30 Å and particle size 10 $\mu$m. The detection is monitored at 235 nm on a multiple wavelength detector. The employed eluent is 1.25 g/l of disodium hydrogen phosphate in a 45 / 55 % (v/v) water / acetonitrile mixture. Separations are conducted at a flow rate of 0.8 ml/minute. Quantification is performed by externally calibrating standard samples of different molecular weight polyethylene glycols.

The polyester according to the invention comprises one or more terminal groups of the formula (III-a) or mixtures thereof. In addition to these one or more terminal groups or mixtures thereof, the polyester according to the invention may comprise further terminal groups, preferably selected from the group consisting of -OH, $-O(C_2H_{2n})OH$, wherein "n" has the meaning given above, and mixtures thereof. In case the polyester according to the invention comprises one or more polyalkyleneglycol-derived structural units of the formula (IV-a) or mixtures thereof, the polyester may also comprise terminal groups of the formula $-O-[R^3-O]_f-H$ wherein $R^3$ and "f" have the meaning given above. Furthermore, and as already stated above, the polyester according to the invention may also comprise one or more terminal groups of the formula (III-b) and/or (III-c).

Preferably, the polyester molecules of the polyester according to the invention comprise two or more terminal groups of the formula (III-a) or mixtures thereof. Even more preferably, all terminal groups of the polyester molecules of the polyester used according to the invention are terminal groups of the formula (III-a) or mixtures thereof.

In a preferred embodiment of the invention, the polyester according to the invention consists of

a1) one or more structural units of the formula (I) and
a2) one or more structural units of the formula (II) or mixtures thereof and
a3) one or more terminal groups of the formula (III-a) or mixtures thereof.

In a further preferred embodiment of the invention, the polyester according to the invention consists of

b1) one or more structural units of the formula (I) and
b2) one or more structural units of the formula (II) or mixtures thereof and
b3) one or more terminal groups of the formula (III-a) or mixtures thereof, and
b4) one or more polyalkyleneglycol-derived structural units of the formula (IV-a) or mixtures thereof.

The polyester according to the invention preferably is anionic or nonionic and more preferably is nonionic.
The groups ($C_2H_4$) in the structural units of the formula (II), in the terminal groups of the formula (III-a), in the terminal groups of the formula (III-b) or in the structural units of the formula (IV-a) preferably are of the formula $-CH_2-CH_2-$.
The groups ($C_3H_6$) in the structural units of the formula (II), in the terminal groups of the formula (III-a) or in the structural units of the formula (IV-a) preferably are of the formula $-CH(CH_3)-CH_2-$ or $-CH_2-CH(CH_3)-$, i.e. of the formula:

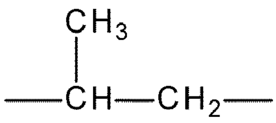

or

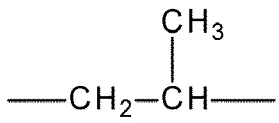

The groups ($C_4H_8$) in the structural units of the formula (II), in the terminal groups of the formula (III-a) or in the structural units of the formula (IV-a) preferably are of the formula $-CH(CH_3)-CH(CH_3)-$, i.e. of the formula:

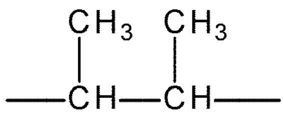

In the polyester according to the invention, the terminal groups or structural units of the formulae (II), (III-a), (III-b) or (IV-a) may e.g. be linked directly to structural units of the formula (I) resulting in ester groups.
In the polyester according to the invention, the structural units of terminal groups of the formulae (I-a) or (III-c) may e.g. be linked directly to structural units of the formula (II) or (IV-a) resulting in ester groups.
It is to be understood that the polyesters according to the invention are typically prepared by polycondensation processes. This leads to statistically determined mixtures of polyesters in which a mixture of molecular species with a distribution around a molar average is obtained.
The following paragraphs will show illustrative, but by no means limiting, structural entities that can be found in the polyester according to the invention.
The structural units of the formula (I) and optional additional di- or polycarboxylic acid-derived structural units are linked indirectly, preferably via the structural units of the formula (II), which - in the case of structural units of the formulae (I) and (II), wherein the structural units of the formula (II) are derived from 1 ,2-propylene glycol - results in the following structural entity:

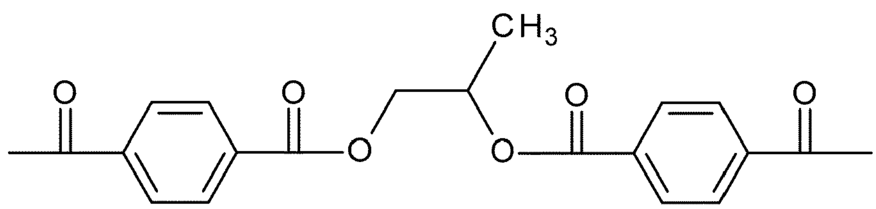

Preferably, the terminal group of the formula (III-a) is linked to an acyl group derived from a dicarboxylic acid, preferably to the structural unit of the formula (I), which - in the case of structural unit of the formula (I) and terminal group of the formula (III-a) - results in the following structural entity:

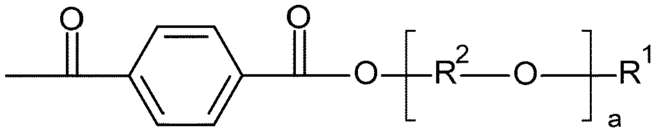

The polyesters according to the invention may be prepared by methods known to the person skilled in the art.

For the preparation of the polyesters of the invention, typically a two-stage process is used of transesterification of diesters and diols, optionally combined with direct esterification of diacids and diols, followed by a polycondensation reaction under reduced pressure.

A further subject matter of the invention is a process for the preparation of the inventive polyesters, comprising the steps of heating recycled dimethyl terephthalate and optionally one or more further substances of the formula Q1-OOC-$C_6H_4$-COO-Q2, wherein the two groups -OOC- and -COO- are in para-position to each other and Q1 and Q2, independently of one another, are selected from the group consisting of H and ($C_1$-$C_4$)-alkyl and preferably are $CH_3$ (but in the case where Q1 and Q2 both are $CH_3$, the substance of the formula Q1-OOC-$C_6H_4$-COO-Q2 is not recycled dimethyl terephthalate), and one or more substances of the formula H-O($C_nH_{2n}$)O-H, wherein n has the meaning given above, and one or more substances of the formula $R^1$-[O-$R^2$]$_a$-OH or mixtures thereof, wherein $R^1$, $R^2$ and "a" have the meaning given above, with the addition of a catalyst, to temperatures of from 160 to 220°C, preferably beginning at atmospheric pressure, and then continuing the reaction under reduced pressure at temperatures of from 160 to 240°C.

Reduced pressure preferably means a pressure of from 0.1 to 900 mbar and more preferably a pressure of from 0.5 to 500 mbar.

Typical transesterification and condensation catalysts known in the art can be used for the inventive process for the preparation of the inventive polyesters, such as antimony, germanium and titanium-based catalysts. Preferably, tetraisopropyl orthotitanate (IPT) and sodium acetate (NaOAc) are used as the catalyst system in the inventive process for the preparation of the polyesters of the invention.

In order to obtain polyesters of the invention comprising one or more structural units of the formula (I-a) or mixtures thereof, one or more substances selected from the group consisting of 5-sulfoisophthalic acid, its salts, its (di) alkylesters, their salts and mixtures thereof, preferably selected from the group consisting of the ($C_1$-$C_4$)-(di)alkyl esters of 5-sulfoisophthalic acid, their salts and mixtures thereof and more preferably selected from the group consisting of (di) methyl esters of 5-sulfoisophthalic acid, their salts and mixtures thereof, may be employed in the inventive process for the preparation of the polyesters of the invention.

In order to obtain polyesters of the invention comprising one or more structural units derived from di- or polycarboxylic acids or their salts or their (di)alkylesters and different from the one or more structural units of the formula (I) and different from the one or more optional structural units of the formula (I-a), one or more substances selected from the group consisting of the respective di- or polycarboxylic acids, their salts, their (di)alkylesters, and mixtures thereof may be employed in the inventive process for the preparation of the polyesters of the invention.

In order to obtain polyesters of the invention comprising one or more structural units derived from triols, tetraols or mixtures thereof, the respective one or more triols, tetraols or mixtures thereof may be employed in the inventive process for the preparation of the polyesters of the invention.

In order to obtain polyesters of the invention comprising one or more terminal groups selected from the group consisting of terminal groups of the formula (III-b), terminal groups of the formula (III-c) and mixtures thereof, one or more substances selected from the group consisting of substance (III-b1), substance (III-c1) and mixtures thereof

$$(M_b^{i+})_x{}^{-}O_3S\text{-}(C_2H_4O)_y\text{-}H \qquad \text{(III-b1)}$$

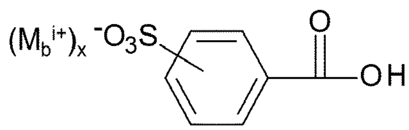

(III-c1)

wherein

- $M_b$ is hydrogen or a monovalent cation or bivalent cation, preferably an ammonium cation, a substituted ammonium cation, or an alkali metal cation
- i is 1 or 2,
- x is 0.5 or 1 and the product i · x = 1, and
- y is, based on a molar average, a number from 1 to 15, preferably from 1 to 3 and more preferably is 1,

may be employed in the inventive process for the preparation of the polyesters of the invention.

In order to obtain polyesters of the invention comprising one or more polyalkyleneglycol-derived structural units of the formula $-O-[R^3-O]_f-$ (IV-a) or mixtures thereof, the respective one or more polyalkyleneglycols of the formula $HO-[R^3-O]_f-H$ or mixtures thereof, may be employed in the inventive process for the preparation of the polyesters of the invention.

The polyesters according to the invention may be used as soil release polymer.

Therefore, a further subject matter of the invention is the use of a polyester according to the invention as soil release polymer.

"Soil release" polymer as used herein means a polymer that enhances soil removal during laundering by modifying the surface of the fabric that is laundered, preferably by increasing surface polarity.

In the use according to the invention as soil release polymer, the polyester preferably is present in a laundry detergent composition.

A further subject matter of the present invention is laundry detergent compositions comprising
Z1) one or more polyesters according to the invention.

The laundry detergent compositions of the invention comprise the one or more polyesters of component Z1) preferably in an amount of at least 0.1 wt.-%, more preferably in an amount from 0.1 to 10 wt.-%, even more preferably in an amount from 0.2 to 5 wt.-% and particularly preferably in an amount from 0.2 to 3 wt.-%, in each case based on the total weight of the laundry detergent composition.

The laundry detergent compositions of the invention preferably comprise
Z2) one or more surfactants.

Surfactants assist in removing soil from textile materials and also assist in maintaining removed soil in solution or suspension in the wash liquor.

Preferably, the one or more surfactants of component Z2) of the laundry detergent compositions of the invention are selected from the group consisting of anionic, nonionic, cationic and zwitterionic surfactants, and more preferably from the group consisting of anionic, nonionic and zwitterionic surfactants.

Anionic Surfactants

Suitable anionic surfactants that may be used are any of the conventional anionic surfactant types typically used in laundry detergent compositions. These include alkyl sulfonates, alkyl ether sulfates, alkyl sulfates, alkyl ester sulfonates and soaps. Preferred anionic surfactants are alkylbenzene sulfonates, alkyl ether sulfates, alkyl sulfates and soaps.

Preferred alkyl sulfonates are alkylbenzene sulfonates, particularly linear alkylbenzene sulfonates (LAS) having an alkyl chain length of $C_8$-$C_{15}$. Possible counter ions for concentrated alkaline liquids are ammonium ions, e.g. those generated by the neutralization of alkylbenzene sulfonic acid with one or more ethanolamines, for example monoethanolamine (MEA) and triethanolamine (TEA), or alternatively, alkali metals, e.g. those arising from the neutralization of alkylbenzene sulfonic acid with alkali hydroxides. The linear alkyl benzene sulfonate surfactants may be LAS with an alkyl chain length of preferably from 8 to 15 and more preferably from 12 to 14. The neutralization of the acid may be performed before addition to the laundry detergent compositions of the invention or during the process of formulating the laundry detergent compositions of the invention through excess addition of neutralizing agent.

Preferred alkyl ether sulfates (AES) are alkyl polyethoxylate sulfate anionic surfactants of the formula

$$R^4O(C_2H_4O)_ySO_3^-M_c^+$$

wherein

$R^4$ is a saturated or unsaturated alkyl chain having preferably from 10 to 22 carbon atoms, and more preferably from 12 to 16 carbon atoms,

$M_c^+$ is a cation which makes the compound water-soluble, preferably an ammonium cation, a substituted ammonium cation, an alkali metal cation, or other material chosen from the list of buffers, and

y averages preferably from 1 to 15, more preferably from 1 to 3 and even more preferably is 3.

Preferred alkyl sulfates (AS) are surfactants of the formula

$$R^5OSO_3^-M_d^+$$

wherein

$R^5$ is a linear or branched alkyl chain having preferably from 8 to 24 carbon atoms, and more preferably from 12 to 18 carbon atoms, and

$M_d^+$ is a cation which makes the compound water-soluble, preferably an ammonium cation, a substituted ammonium cation, an alkali metal cation, or other material chosen from the list of buffers.

Soaps are preferably fatty acids and more preferably linear saturated or unsaturated fatty acids having from 10 to 18 carbon atoms.

Nonionic Surfactants

Nonionic surfactants include primary and secondary alcohol ethoxylates, especially $C_8$-$C_{20}$ aliphatic alcohol ethoxylated with an average of from 1 to 35 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol. Non-ethoxylated nonionic surfactants include alkyl polyglycosides, glycerol monoethers and polyhydroxy amides (glucamides) such as N-methyl glucamides. Mixtures of nonionic surfactant may be used.

If included therein, the laundry detergent compositions of the invention contain preferably from 0.2 to 40 wt.-% and more preferably from 1 to 20 wt.-% of a nonionic surfactant, such as alcohol ethoxylate, nonylphenol ethoxylate, alkylpolyglycoside, alkyldimethylamineoxide, ethoxylated fatty acid monoethanolamide, fatty acid monoethanolamide, polyhydroxy alkyl fatty acid amide, or N-acyl N-alkyl derivatives of glucosamine ("glucamides"), in each case based on the total weight of the laundry detergent composition.

Zwitterionic Surfactants

The laundry detergent compositions of the invention may comprise up to 10 wt.-% of a zwitterionic surfactant, e.g. amine oxide or betaine, based on the total weight of the laundry detergent composition.

Typical amine oxides used are of the formula

$$R^6N(O)(CH_2R^7)_2$$

wherein

$R^6$ is a long chain moiety and each $CH_2R^7$ are short chain moieties, and

$R^7$ is preferably selected from the group consisting of H, $CH_3$ and $-CH_2OH$.

In general, $R^6$ is a primary or branched hydrocarbyl moiety with a chain length of from 8 to 18, which can be saturated or unsaturated. Preferably, $R^6$ is a primary alkyl moiety with a chain length of 8 to 18 carbon atoms.

Preferred amine oxides have compositions wherein $R^6$ is a $C_8$-$C_{18}$ alkyl and $R^7$ is H. These amine oxides are illustrated by $C_{12-14}$ alkyldimethyl amine oxide, hexadecyl dimethylamine oxide, octadecylamine oxide.

A preferred amine oxide material is lauryl dimethylamine oxide, also known as dodecyldimethylamine oxide or DDAO.

Betaines may be alkyldimethyl betaines or alkylamido betaines, wherein the alkyl groups have $C_{12-18}$ chains.

In a preferred embodiment of the invention, the one or more surfactants of component Z2) of the laundry detergent compositions of the invention are selected from the group consisting of linear alkyl benzene sulfonates, alkyl ether sulfates, alkyl sulfates, soaps, nonionic surfactants, amine oxides and betaines, and preferably the one or more surfactants of component Z2) of the laundry detergent compositions of the invention are selected from the group consisting of linear alkyl benzene sulfonates, alkyl ether sulfates, alkyl sulfates, soaps and nonionic surfactants.

Additional Surfactants

Other surfactants than the preferred LAS, AES, AS, soaps and nonionic surfactants may be added to the mixture of surfactants.

The laundry detergent compositions of the invention comprise the one or more surfactants of component Z2) preferably in an amount of at least 3 wt.-%, more preferably in an amount from 3 to 65 wt.-%, even more preferably in an amount from 4 to 60 wt.-% and particularly preferably in an amount from 5 to 55 wt.-%, in each case based on the total weight of the laundry detergent composition.

Further Optional Ingredients

In addition to the one or more polyesters of component Z1) and optionally the one or more surfactants of component Z2), the laundry detergent compositions of the invention may comprise one or more further optional ingredients, e.g. they may comprise conventional ingredients commonly used in laundry detergent compositions. Examples of optional ingredients include, but are not limited to builders, bleaching agents, bleach active compounds, bleach activators, bleach catalysts, photobleaches, dye transfer inhibitors, colour protection agents, anti-redeposition agents, dispersing agents, fabric softening and antistatic agents, fluorescent whitening agents, enzymes, enzyme stabilizing agents, foam regulators, defoamers, malodor reducers, preservatives, disinfecting agents, hydrotropes, fibre lubricants, anti-shrinkage agents, buffers, fragrances, processing aids, colorants, dyes, pigments, anti-corrosion agents, fillers, stabilizers and other conventional ingredients for laundry detergent compositions.

Polyalkoxylated polyethyleneimine

For detergency boosting, it is advantageous to use a second polymer alongside the one or more polyesters of component Z1) in the laundry detergent compositions of the invention. This second polymer is preferably a polyalkoxylated polyethyleneimine (EPEI). Polyethylene imines are materials composed of ethylene imine units $-CH_2CH_2NH-$ and, where branched, the hydrogen on the nitrogen is replaced by another chain of ethylene imine units. These polyethyleneimines can be prepared, for example, by polymerizing ethyleneimine in the presence of a catalyst such as carbon dioxide, sodium bisulfite, sulfuric acid, hydrogen peroxide, hydrochloric acid, acetic acid, and the like.

Other Polymers

In addition to the one or more polyesters of component Z1) and the optional EPEI, the laundry detergent compositions of the invention may comprise other polymeric materials, for example: dye transfer inhibition polymers, anti-redeposition polymers and cotton soil release polymers, especially those based on modified cellulosic materials. Especially, if EPEI is not present, the laundry detergent compositions of the invention may further comprise a polymer of polyethylene glycol and vinyl acetate, for example the lightly grafted copolymers described in WO 2007/138054. Such amphiphilic graft polymers based on water-soluble polyalkylene oxides as graft base and side chains formed by polymerisation of a vinyl ester component have the ability to enable reduction of surfactant levels whilst maintaining high levels of oily soil removal.

Hydrotropes

In the context of this invention a hydrotrope is a solvent that is neither water nor conventional surfactant that aids the solubilisation of the surfactants and other components, especially polymer and sequestrant, in the liquid to render it isotropic. Among suitable hydrotropes there may be mentioned as preferred: monopropylene glycol (MPG), glycerol, sodium cumene sulfonate, ethanol, other glycols, e.g. dipropylene glycol, diethers and urea. MPG and glycerol are preferred hydrotropes.

Enzymes

It is preferable that one or more enzymes selected from protease, mannanase, pectate lyase, cutinase, lipase, amylase, and cellulase may be present in the laundry detergent compositions of the invention. Less preferred additional enzymes may be selected from esterase, peroxidase and oxidase. The enzymes are preferably present with corresponding enzyme stabilizers. The total enzyme content in the laundry detergent compositions of the invention is preferably from 0 to 5 wt.-%, more preferably from 0.2 to 4 wt.-% and even more preferably from 0.4 to 2 wt.-%, in each case based on the total weight of the laundry detergent composition.

Sequestrants

Sequestrants are preferably included. Preferred sequestrants include organic phosphonates, alkanehydroxy phosphonates and carboxylates available under the DEQUEST trademark from Thermphos. The preferred sequestrant level is less than 10 wt.-% and preferably less than 5 wt.-%, in each case based on the total weight of the laundry detergent composition of the invention. A particularly preferred sequestrant is HEDP (1-Hydroxyethylidene-1,1-diphosphonic acid). Also suitable but less preferred as it gives inferior cleaning results is diethylenetriamine penta(methylene phosphonic acid) (DTPMP) or Heptasodium DTPMP.

Buffers

In addition to agents optionally included for the generation of anionic surfactants, e.g. from LAS or fatty acids, the presence of buffer is preferred for pH control. Possible buffers are one or more ethanolamines, e.g. monoethanolamine (MEA) or triethanolamine (TEA). They are preferably used in the laundry detergent compositions of the invention at levels of from 1 to 15 wt.-%, based on the total weight of the laundry detergent composition. Other suitable amino alcohol buffer materials may be selected from the group consisting of compounds having a molecular weight above 61 g/mol, which includes MEA. Suitable materials also include, in addition to the already mentioned materials: monoisopropanolamine, diisopropanolamine, triisopropanolamine, monoamino hexanol, 2-[(2-methoxyethyl) methylamino]-ethanol, propanolamine, N-methylethanolamine, diethanolamine, monobutanolamine, isobutanolamine, monopentanolamine, 1-amino-3-(2-methoxyethoxy)-2-propanol, 2-methyl-4-(methylamino)-2-butanol and mixtures thereof.
Potential alternatives to amino ethanol buffers are alkali hydroxides such as sodium hydroxide or potassium hydroxide.

Builders

Further washing and cleaning ingredients which may be present in the laundry detergent compositions of the invention include inorganic and/or organic builders in order to reduce the degree of hardness of the water. These builders may be present in the laundry detergent compositions of the invention in amounts of from about 5 to about 80 wt.-%, based on the total weight of the laundry detergent compositions. Inorganic builders include, for example, alkali metal, ammonium and alkanolammonium salts of polyphosphates, silicates, carbonates, sulfates and aluminosilicates.
Suitable organic builders include polycarboxyl compounds, such as, for example, ether polycarboxylates, ether hydroxypolycarboxylates, copolymers of maleic anhydride with ethylene or vinyl methyl ether, 1,3,5-trihydroxybenzene-2,4,6-trisulfonic acid and carboxymethyloxysuccinic acid, the alkali metal, ammonium and substituted ammonium salts of polyacetic acids, such as, for example, ethylenediaminetetraacetic acid and nitrilotriacetic acid, and also polycarboxylic acids, such as mellitic acid, succinic acid, oxydisuccinic acid, polymaleic acid, benzene-1,3,5-tricarboxylic acid, carboxymethyloxysuccinic acid, and soluble salts thereof. Builders based on citrates, for example citric acid and its soluble salts, in particular the sodium salt, are preferred polycarboxylic acid builders, which can also be used in granulated compositions, in particular together with zeolites and/or sheet silicates.
It may be advantageous to include fluorescer and/or bleach catalyst in the laundry detergent compositions of the invention as further high efficiency performance additives. Perfume and colorants will also desirably be included. The laundry detergent compositions of the invention may additionally contain viscosity modifiers, foam boosting agents, preservatives (e.g. bactericides), pH buffering agents, polyelectrolytes, anti-shrinking agents, anti-wrinkle agents, antioxidants, sunscreens, anti-corrosion agents, drape imparting agents, anti-static agents and ironing aids. The laundry detergent compositions of the invention may further comprise pearlisers and/or opacifiers or other visual cues and shading dye.

Form, packaging and dosing

The laundry detergent compositions of the invention may be in solid or in liquid form, including a gel form. The laundry detergent compositions of the invention may be packaged as unit doses in a polymeric film soluble in the wash water. Alternatively, the laundry detergent compositions of the invention may be supplied in multidose plastics packs with a top or bottom closure. A dosing measure may be supplied with the pack either as a part of the cap or as an integrated system.
In one embodiment of the invention the laundry detergent composition is solid.
In a further embodiment of the invention the laundry detergent composition is liquid.
A further subject matter of the invention is a method of washing a textile comprising the step of contacting the textile with an aqueous solution comprising a laundry detergent composition according to the invention, preferably at a temperature between 10°C and 90°C, furthermore preferably for a time between 5 minutes and 4 hours, and more preferably in a washing machine.
The concentration of the one or more polyesters according to the invention in the aqueous solution is typically in the range of from 0.001 g/l to 0.5 g/l, from 0.002 g/l to 0.5 g/l, from 0.01 g/l to 0.5 g/l, from 0.02 g/l to 0.5 g/l, from 0.1 g/l to 0.5 g/l, or from 0.2 g/l to 0.4 g/l, or from 0.001 g/l to 0.2 g/l, from 0.002 g/l to 0.2 g/l, from 0.01 g/l to 0.2 g/l, from 0.02 g/l to 0.2 g/l, or from 0.1 g/l to 0.2 g/l.
Further preferred embodiments of the invention may arise from the combination of above-described preferred embodiments.

## EXAMPLES

The examples below are intended to illustrate the invention in detail without, however, limiting it thereto. Unless explicitly stated otherwise, all percentages given are percentages by weight (% by wt. or wt.-%).

Key to abbreviations used:

| | |
|---|---|
| rDMT | recycled dimethyl terephthalate |
| DMT | non-recycled dimethyl terephthalate |
| 5-SIM | dimethyl 5-sulfoisophthalate Na-salt |
| EG | ethylene glycol |
| PG | 1,2-propylene glycol |
| PEG1500 | polyethylene glycol, average molecular weight 1.5 kDa |
| PEG6000 | polyethylene glycol, average molecular weight 6 kDa |
| IPT | tetraisopropyl orthotitanate |
| NaOAc | sodium acetate |
| mPEG250 | mono hydroxyl-functional polyethylene glycol monomethyl ether, average molecular weight 0.25 kDa |
| mPEG750 | mono hydroxyl-functional polyethylene glycol monomethyl ether, average molecular weight 0.75 kDa |
| mPEG1250 | mono hydroxyl-functional polyethylene glycol monomethyl ether, average molecular weight 1.25 kDa |
| mPEG2000 | mono hydroxyl-functional polyethylene glycol monomethyl ether, average molecular weight 2 kDa |
| mPEG3000 | mono hydroxyl-functional polyethylene glycol monomethyl ether, average molecular weight 3 kDa |
| mPEG5000 | mono hydroxyl-functional polyethylene glycol monomethyl ether, average molecular weight 5 kDa |
| mPEG45PPG5 | $H_3C-(OC_2H_4)_{45}-(OC_3H_6)_5-OH$ wherein the $-(OC_2H_4)$ groups and the $-(OC_3H_6)$ groups are arranged blockwise and the block consisting of the $-(OC_3H_6)$ groups is bound to the OH group |
| Tallow-25EO | tallow alcohol ($C_{16/18}$, $C_{18}$ rich, saturated (hydrogenated)) ethoxylate with 25 ethylene oxide |

### Polyester preparation

The polyester synthesis is carried out by the reaction of recycled dimethyl terephthalate (rDMT), optionally one or more further diesters, one or more alkylene glycols, optionally one or more polyalkylene glycols, and one or more alkyl capped polyalkylene glycols, using sodium acetate (NaOAc) and tetraisopropyl orthotitanate (IPT) as the catalyst system. The synthesis is a two-step procedure. The first step is a transesterification and the second step is a polycondensation.

### Polyester Examples I-X

#### Transesterification

All reactants and NaOAc but not tetraisopropyl orthotitanate are weighed into a reaction vessel at room temperature under a nitrogen atmosphere. Within 2 hours, the temperature of the reaction mixture is continuously increased to 150 °C under a weak nitrogen flow for melting and homogenization, followed by the addition of tetraisopropyl orthotitanate.

Within 2 hours, the temperature of the reaction mixture is continuously increased to 210 °C under a weak nitrogen flow and held at this temperature for 2 hours. During the transesterification methanol is released from the reaction and is distilled out of the system. After 2 hours at 210 °C nitrogen is switched off and the pressure is reduced to 400 mbar over 3 hours.

#### Polycondensation

The mixture is heated up to 230 °C. At 230 °C the pressure is reduced to 1 mbar over 160 minutes. Once the polycondensation reaction has started, the alkylene glycol or mixture of alkylene glycols is distilled out of the system. The mixture is stirred for 4 hours at 230 °C and a pressure of 1 mbar. After the end of this time period, the inner pressure of the reaction vessel is set back to 1 bar using nitrogen and the polymer melt is subsequently removed from the reactor and allowed to solidify.

The reactants and the catalyst for the preparation of Polyester Examples I-X and their amounts are shown in Table 1.

Table 1 Reactants and catalyst and their amounts for the preparation of Polyester Examples I-X

| Polyester Example | I | II | III | IV | V | VI | VII | VIII | IX | X |
|---|---|---|---|---|---|---|---|---|---|---|
| Reactant and catalyst | Weight [g] | | | | | | | | | |
| rDMT | 20.1 | 10.1 | 20.1 | 36.2 | 29.1 | 35.8 | 100.0 | 12.5 | 38.8 | 102.0 |
| DMT | - | 10.0 | - | 4.0 | - | - | - | - | - | - |
| PG | 17.8 | 17.8 | 8.9 | - | - | 25.7 | 79.9 | 79.9 | 30.4 | 84.0 |
| EG | - | - | 7.3 | 29.0 | 18.6 | - | - | - | - | - |
| PEG6000 | - | - | - | - | 240.0 | - | - | - | - | - |
| NaOAc | 0.15 | 0.15 | 0.15 | 0.30 | 0.07 | 0.13 | 0.50 | 0.10 | 0.50 | 0.50 |
| IPT | 0.06 | 0.06 | 0.06 | 0.13 | 0.03 | 0.05 | 0.20 | 0.04 | 0.20 | 0.20 |
| mPEG750 | 90.0 | 90.0 | 90.0 | 90.0 | 11.3 | - | - | - | - | - |
| mPEG2000 | - | - | - | - | 14.0 | 78.8 | - | - | - | - |
| mPEG3000 | - | - | - | - | - | - | 325.0 | - | - | - |
| mPEG5000 | - | - | - | - | - | - | - | 75.0 | - | - |
| Tallow-25EO | - | - | - | - | - | - | - | - | 271.6 | - |
| mPEG45PPG5 | - | - | - | - | - | - | - | - | - | 343.5 |

Polyester Example XI

281.5 g PG, 229.6 g EG, 250.0 g mPEG250, 970.9 g rDMT and 237.0 g 5-SIM are initially introduced into a reaction vessel at room temperature under a nitrogen atmosphere. In countercurrent, 1.0 g IPT and 0.8 g NaOAc are then added to the reaction mixture. The mixture is slowly heated on an oil bath, during which, beginning at an internal temperature of about 120-150 °C, the solid components start to melt. With stirring, the mixture is then heated to 190 °C over the course of 30 minutes. At about 173°C, the transesterification and distillation start. In the course of 2 hours, the internal temperature is increased to 210 °C until the amount of condensate required according to the stoichiometry is reached. The oil bath temperature is then increased to about 240-250 °C and the internal pressure is reduced to best oil pump vacuum over the course of 30 minutes. During the three-hour vacuum phase, the condensation is completed by distilling off the excess amount of alcohol. During this time, the internal temperature of the polyester melt slowly increases to about 220 °C at the end of the reaction. Aeration with $N_2$ is then carried out and the melt is discharged onto metal sheets.

Polyester Example XII

164.4 g rDMT, 87.9 g PG, 29.5 g EG, 1.14 g pentaerythritol, and 0.75 g NaOAc are weighed into a reaction vessel at room temperature under a nitrogen atmosphere and heated to 60 °C. At this temperature, 0.2 g IPT is added. Within 2 hours, the temperature of the reaction mixture is continuously increased to 150 °C under a weak nitrogen flow. Within further 2 hours, the temperature of the reaction mixture is continuously increased to 200 °C under a weak nitrogen flow and held at this temperature for 2 hours. During the transesterification methanol is released from the reaction and is distilled out of the system. After 2 hours at 200 °C the reaction mixture is cooled to room temperature. 328.7 g PEG1500 and 137.8 g mPEG1250 are added. The mixture is heated up to 215 °C under a weak flow of nitrogen. Subsequently, nitrogen is switched off and the pressure is reduced to 150 mbar over 2 hours and to 10 mbar over further 2 hours. Once the polycondensation reaction has started, the mixture of alkylene glycols is distilled out of the system. The mixture is stirred for 2 hours at 215 °C and a pressure of 10 mbar. After the end of this time period, the inner pressure of the reaction vessel is set back to 1 bar using nitrogen and the polymer melt is subsequently removed from the reactor and allowed to solidify.

Laundry detergent compositions

In the following examples for laundry detergent compositions are given.

Key to abbreviations used:

| | |
|---|---|
| LAS | $C_{12-14}$ linear alkylbenzene sulfonate, sodium salt |
| SLES 2EO | sodium lauryl ether sulfate with 2 moles EO |

| | |
|---|---|
| NI 7EO | $C_{12-15}$ alcohol ethoxylate 7EO nonionic |
| Fatty Acid | a $C_{12-18}$ stripped palm kernel fatty acid |
| EDTA | ethylenediaminetetraacetic acid |

Table 2 Liquid laundry detergent composition

| Ingredient | wt.-% |
|---|---|
| LAS | 5.2 |
| SLES 2EO | 6.5 |
| NI 7EO | 5.2 |
| Fatty Acid | 2.8 |
| Glycerol | 2.4 |
| Ethanol | 1.2 |
| Sodium citrate | 1.7 |
| Sodium tetraborate decahydrate | 2.0 |
| SRP | 1.0 |
| Demin water and NaOH to adjust pH | ad 100 |
| pH Value | 8.4 |

The SRP in the liquid laundry detergent composition of Table 2 may be the polyesters of Polyester Examples I-XII.

Table 3 Washing powder

| Ingredient | wt.-% |
|---|---|
| Alkylbenzenesulfonate, Na salt | 8.0 |
| $C_{12-18}$-alcohol ethoxylates with 14 EO | 2.9 |
| Soap | 3.5 |
| Sodium tripolyphosphate | 42.8 |
| Sodium silicate | 7.5 |
| Magnesium silicate | 1.9 |
| Carboxymethylcellulose | 1.2 |
| EDTA | 0.2 |
| Optical brightener | 0.2 |
| Sodium sulfate | 21.0 |
| SRP | 1.0 |
| Water | 9.8 |

The SRP in the washing powder of Table 3 may be the polyesters of Polyester Examples VI-XI.

## Claims

1. A polyester comprising one or more structural units of the formula (I)

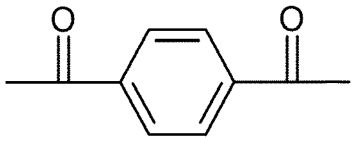

(I)

and one or more structural units of the formula (II) or mixtures thereof

$$-O(C_nH_{2n})O- \qquad (II)$$

wherein $(C_nH_{2n})$ is a linear or branched alkylene group with n being a number from 2 to 10 or mixtures thereof, preferably with n being a number from 2 to 6 or mixtures thereof, more preferably is selected from the group consisting of $(C_2H_4)$, $(C_3H_6)$, $(C_4H_8)$ and mixtures thereof, even more preferably is selected from the group consisting of $(C_2H_4)$, $(C_3H_6)$ and mixtures thereof, and particularly preferably is $(C_3H_6)$,
and one or more terminal groups of the formula (III-a) or mixtures thereof

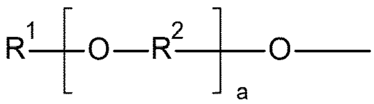

(III-a)

wherein

$R^1$ is a linear or branched, preferably a linear, alkyl group comprising from 1 to 30 carbon atoms or a linear or branched, preferably a linear, alkenyl group comprising one or more double bonds and from 2 to 30 carbon atoms or mixtures thereof, preferably a linear or branched, preferably a linear, alkyl group comprising from 1 to 20 carbon atoms or a linear or branched, preferably a linear, alkenyl group comprising one or more double bonds and from 2 to 20 carbon atoms or mixtures thereof,
a is, based on a molar average, a number from 1 to 200, preferably from 4 to 150, more preferably from 10 to 120, and
$R^2$ is a linear or branched alkylene group $(C_mH_{2m})$ with m being a number from 2 to 10 or mixtures thereof, preferably with m being a number from 2 to 6 or mixtures thereof, more preferably is selected from the group consisting of $(C_2H_4)$, $(C_3H_6)$, $(C_4H_8)$ and mixtures thereof, even more preferably is selected from the group consisting of $(C_2H_4)$, $(C_3H_6)$ and mixtures thereof, and particularly preferably is $(C_2H_4)$,

**characterized in that** at least 50 wt.-%, preferably at least 80 wt.-%, and more preferably 100 wt.-%, of the one or more structural units of the formula (I) contained in the polyester are derived from recycled dimethyl terephthalate, in each case based on the total weight of the one or more structural units of the formula (I) contained in the polyester.

2. The polyester according to claim 1, **characterized in that** the number of structural units of the formula (I) in the polyester is, based on a molar average, from 2 to 60, preferably from 2 to 40, more preferably from 2 to 30, even more preferably from 2 to 20 and particularly preferably from 5 to 20.

3. The polyester according to claims 1 or 2, **characterized in that** the number of structural units of the formula (I) in the polyester is, based on a molar average, from 2 to 15, $R^1$ is a linear or branched, preferably a linear, alkyl group comprising from 1 to 20 and preferably from 1 to 18 carbon atoms, or mixtures thereof, and a is, based on a molar average, a number from 10 to 150, preferably from 15 to 140.

4. The polyester according to one or more of claims 1 to 3, **characterized in that** the number of structural units of the formula (I) in the polyester is, based on a molar average, from 2 to 15, $R^1$ is methyl, and a is, based on a molar average, a number from 10 to 100, preferably from 15 to 60.

5. The polyester according to one or more of claims 1 to 3, **characterized in that** the number of structural units of the formula (I) in the polyester is, based on a molar average, from 5 to 15, $R^1$ is a linear or branched, preferably a linear, alkyl group comprising from 10 to 20 carbon atoms or mixtures thereof, and a is, based on a molar average, a number from 60 to 150, preferably from 70 to 140.

6. The polyester according to claim 5, **characterized in that** $R^1$ in the polyester is a linear or branched, preferably a

linear, alkyl group comprising from 10 to 16 carbon atoms or mixtures thereof, and even more preferably is selected from the group consisting of lauryl, myristyl and mixtures thereof.

**7.** The polyester according to one or more of claims 1 to 6, **characterized in that** it comprises one or more polyalkyleneglycol-derived structural units of the formula (IV-a)

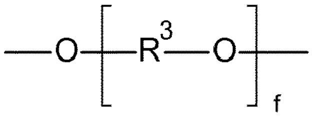

(IV-a)

or mixtures thereof, wherein

f is, based on a molar average, a number from 2 to 200, preferably from 4 to 150, more preferably from 10 to 120 and even more preferably from 35 to 120, and
$R^3$ is a linear or branched alkylene group ($C_nH_{2n}$), with n being a number from 2 to 10 or mixtures thereof, preferably with n being a number from 2 to 6 or mixtures thereof, more preferably is selected from the group consisting of ($C_2H_4$), ($C_3H_6$), ($C_4H_8$) and mixtures thereof, even more preferably is selected from the group consisting of ($C_2H_4$), ($C_3H_6$) and mixtures thereof, and particularly preferably is ($C_2H_4$).

**8.** The polyester according to one or more of claims 1 to 7, **characterized in that** the amount of the one or more terminal groups of the formula (III-a) or mixtures thereof, or, in case the polyester comprises one or more polyalkyleneglycol-derived structural units of the formula (IV-a) or mixtures thereof, the combined amount of the one or more terminal groups of the formula (III-a) or mixtures thereof and the one or more polyalkyleneglycol-derived structural units of the formula (IV-a) or mixtures thereof, in the polyester is at least 10 wt.-%, preferably is at least 20 wt.-%, more preferably is at least 40 wt.-%, even more preferably is from 40 to 90 wt.-% and particularly preferably is from 50 to 90 wt.-%, in each case based on the total weight of the polyester.

**9.** The polyester according to one or more of claims 1 to 8, **characterized in that** the combined amount of the one or more structural units of the formula (I), and the one or more structural units of the formula (II) or mixtures thereof, and the one or more terminal groups of the formula (III-a) or mixtures thereof, and, if present, the one or more polyalkyleneglycol-derived structural units of the formula (IV-a) or mixtures thereof, in the polyester is at least 50 wt.-%, preferably is at least 60 wt.-% and more preferably is at least 70 wt.-%, in each case based on the total weight of the polyester.

**10.** The polyester according to one or more of claims 1 to 9, **characterized in that** its weight average molecular weight ($M_w$) is from 1500 to 20000 g/mol, preferably from 4000 to 20000 g/mol and more preferably from 5000 to 20000 g/mol.

**11.** The polyester according to one or more of claims 1 to 10, **characterized in that** it either

a) consists of

a1) one or more structural units of the formula (I) and
a2) one or more structural units of the formula (II) or mixtures thereof and
a3) one or more terminal groups of the formula (III-a) or mixtures thereof,
or

b) consists of

b1) one or more structural units of the formula (I) and
b2) one or more structural units of the formula (II) or mixtures thereof and
b3) one or more terminal groups of the formula (III-a) or mixtures thereof, and
b4) one or more polyalkyleneglycol-derived structural units of the formula (IV-a) or mixtures thereof.

**12.** The use of a polyester according to one or more claims 1 to 11 as soil release polymer.

**13.** A laundry detergent composition comprising
Z1) one or more polyesters according to one or more of claims 1 to 11.

**14.** The laundry detergent composition according to claim 13, **characterized in that** it comprises the one or more polyesters of component Z1) in an amount of at least 0.1 wt.-%, preferably in an amount from 0.1 to 10 wt.-%, more preferably in an amount from 0.2 to 5 wt.-% and even more preferably in an amount from 0.2 to 3 wt.-%, in each case based on the total weight of the laundry detergent composition.

**15.** The laundry detergent composition according to claim 13 or 14, **characterized in that** it comprises, as component Z2), one or more surfactants in an amount of at least 3 wt.-%, preferably in an amount from 3 to 65 wt.-%, more preferably in an amount from 4 to 60 wt.-% and even more preferably in an amount from 5 to 55 wt.-%, in each case based on the total weight of the laundry detergent composition.

Europäisches Patentamt
European Patent Office
Office européen des brevets

# EUROPEAN SEARCH REPORT

Application Number
EP 23 21 2673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/261728 A1 (ARNDT MATTHIAS [DE] ET AL) 26 August 2021 (2021-08-26)<br>* paragraphs [0154], [0180] - [0185]; claims 1,16-18,21; examples I-V; tables I,III *<br>----- | 1-15 | INV.<br>C08G63/183<br>C08G63/672<br>C11D3/00<br>C11D3/37 |
| X | US 2015/210961 A1 (CARSWELL ROBERT JOHN [GB] ET AL) 30 July 2015 (2015-07-30)<br>* paragraphs [0057] - [0063], [0114] - [0130]; claim 1; examples I,II *<br>----- | 1-15 | |
| X | US 2021/171874 A1 (SI GANG [GB] ET AL) 10 June 2021 (2021-06-10)<br>* paragraphs [0186] - [0221]; claim 1; examples 5-7 *<br>----- | 1-15 | |

TECHNICAL FIELDS SEARCHED (IPC)

C08G
C09J
C11D

The present search report has been drawn up for all claims

1

| Place of search | Date of completion of the search | Examiner |
|---|---|---|
| The Hague | 18 April 2024 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 21 2673

This annex lists the patent family members relating to the patent documents cited in the above-mentioned European search report. The members are as contained in the European Patent Office EDP file on
The European Patent Office is in no way liable for these particulars which are merely given for the purpose of information.

18-04-2024

| Patent document cited in search report | Publication date | Patent family member(s) | Publication date |
|---|---|---|---|
| US 2021261728 A1 | 26-08-2021 | AR 115165 A1 | 02-12-2020 |
| | | EP 3802765 A1 | 14-04-2021 |
| | | US 2021261728 A1 | 26-08-2021 |
| | | WO 2019224030 A1 | 28-11-2019 |
| US 2015210961 A1 | 30-07-2015 | AU 2013298728 A1 | 05-02-2015 |
| | | BR 112015001754 A2 | 04-07-2017 |
| | | CL 2015000205 A1 | 02-10-2015 |
| | | CN 104508000 A | 08-04-2015 |
| | | EP 2880074 A1 | 10-06-2015 |
| | | ES 2593825 T3 | 13-12-2016 |
| | | US 2015210961 A1 | 30-07-2015 |
| | | WO 2014019903 A1 | 06-02-2014 |
| | | ZA 201500514 B | 26-10-2016 |
| US 2021171874 A1 | 10-06-2021 | EP 3835396 A1 | 16-06-2021 |
| | | US 2021171874 A1 | 10-06-2021 |
| | | WO 2021118814 A1 | 17-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1466639 A
- US 4132680 A
- US 4702857 A
- EP 0199403 A
- US 4711730 A
- US 4713194 A
- US 4759876 A
- WO 2020002999 A2
- US 20230125080 A1
- US 20230088250 A1
- WO 2007138054 A